Europäisches Patentamt

European Patent Office

Office européen des brevets

(11) Numéro de publication: **0 343 032**
**A1**

## (12) DEMANDE DE BREVET EUROPEEN

(21) Numéro de dépôt: **89401248.3**

(22) Date de dépôt: **03.05.89**

(51) Int. Cl.4: **C 09 K 3/14**

(30) Priorité: **18.05.88 FR 8806623**

(43) Date de publication de la demande:
**23.11.89 Bulletin 89/47**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Iltis, Alain**
**13, rue des Noyers**
**F-93300 - Aubervilliers (FR)**

**Maestro, Patrick**
**27, rue Honoré de Balzac**
**F-95470 Fosses (FR)**

(74) Mandataire: **Esson, Jean-Pierre et al**
**RHONE-POULENC CHIMIE Service Brevets Chimie 25,**
**quai Paul Doumer**
**F-92408 Courbevoie Cedex (FR)**

(54) Abrasifs à base de terres rares.

(57) La présente invention est relative à des abrasifs à base de terres rares.

L'objet de l'invention est l'utilisation comme abrasif, d'au moins un borure de terre rare.

Les abrasifs de l'invention conviennent tout-à-fait pour l'abrasion des matériaux durs.

EP 0 343 032 A1

EP 0 343 032 A1

## Description

## ABRASIFS A BASE DE TERRES RARES

La présente invention est relative à des abrasifs à base de terres rares. Elle a trait, plus particulièrement, à leur utilisation comme abrasifs des matériaux durs.

Parmi les produits abrasifs que l'on trouve actuellement sur le marché, on peut citer l'alumine, le carbure de silicium, le nitrure de bore cubique et le diamant.

L'alumine et le carbure de silicium sont des produits peu coûteux. Toutefois, l'alumine ne permet pas d'accéder à des durées d'utilisation importantes. Quant au carbure de silicium, il peut présenter une certaine réactivité avec le matériau à abraser, notamment dans le cas du traitement des aciers et, de plus, sa dureté est insuffisante pour permettre l'abrasion des céramiques.

Le nitrure de bore et le diamant sont d'excellents abrasifs, mais leur prix est de très loin supérieur aux produits abrasifs traditionnels.

Le but poursuivi par la présente invention est de fournir un abrasif s'approchant des performances techniques de ces derniers, mais d'un prix plus abordable.

La recherche d'un produit abrasif n'est pas aisée, car celui-ci doit satisfaire à de nombreuses exigences, notamment il doit être constitué de particules présentant une grande dureté, une résistance à la rupture modérée et avoir la propriété de se casser en donnant des arêtes vives. Il est important de noter que ledit produit doit posséder une certaine aptitude à la rupture afin d'avoir les propriétés abrasives requises, mais il ne doit pas être trop fragile, car il aura alors une durée de vie limitée. Enfin, le produit abrasif ne doit pas être réactif avec le matériau à traiter.

La présente invention préconise l'utilisation d'au moins un borure de terre rare, comme abrasif, notamment des matériaux durs.

On entend par l'expression "terres rares", les éléments de terres rares appelés lanthanides ayant des numéros atomiques de 57 à 71, inclus l'yttrium de numéro atomique égal à 39.

La demanderesse a trouvé que les borures de terres rares présentaient des propriétés d'abrasion supérieures à des abrasifs classiques mais durs tels que le carbure de bore et le carbure de silicium et que des performances équivalentes à celles du diamant pouvaient être atteintes moyennant un accroissement de la concentration en borure de terre rare, dans des limites très raisonnables permettant de soutenir une compétition économique.

A titre d'agents abrasifs, l'invention propose la mise en oeuvre d'un borure de terre rare. Il existe plusieurs types de borures de terres rares. L'hexaborure de terre rare a une maille élémentaire cubique du type CsCl. Le tétraborure de terre rare cristallise dans le système quadratique.

Selon l'invention, on peut faire appel à tout type de borure de terre rare mais l'on choisit de préférence un hexaborure de terre rare.

Pour le choix de la terre rare, on a recours de préférence aux borures de terbium, de cérium, d'ytterbium, mais d'un point de vue économique, il est plus souhaitable de faire appel aux borures de terres rares cériques qui sont le cérium, le lanthane, le praséodyme, le néodyme.

Les borures de terres rares étant des produits connus, on se référera à la littérature pour leur préparation. On citera, à titre d'exemples, qu'il est possible de faire appel à un borure de terre rare préparé à partir d'un oxyde de terre rare selon un procédé de borocarbothermie [cf. G.A. Meerson et al. Izv. Akad. Nauk SSSR Neorg. Mater 3 n° 5, p. 802-806 (1967)]. On peut également mettre en oeuvre un borure de terre rare préparé par réduction du chlorure de terre rare par du bore élémentaire (demande de brevet n° 87/16396) éventuellement en présence d'aluminium (demande de brevet n° 88/05332).

Le borure de terre rare utilisé comme abrasif se présente sous forme d'une poudre dont la taille des grains s'échelonne entre 0,5 et 100 μm et dont le diamètre moyen se situe, de préférence, aux environs de 10 μm.

Dans certains cas, il peut être envisagé d'effectuer une opération de délitage des agglomérats du borure de terre rare aux ultrasons ou si nécessaire, une opération de broyage effectuée, par exemple, dans un broyeur à jet d'air.

Les borures de terres rares constituent selon l'invention, des abrasifs qui peuvent être utilisés dans les opérations très variées de traitement de surface des matériaux, opérations largement décrites dans la littérature [cf. KIRK OTHMER - Encylopedia of Chemical Technology -1, p. 26-52 (3e édition)].

Ils conviennent tout-à-fait bien pour le traitement des matériaux durs. A titre d'exemples, on peut citer les céramiques telles que l'alumine ; les carbures de tungstène, de tantale, de zirconium, de béryllium, de titane, de silicium, de bore ; les nitrures de titane et de silicium ; les métaux et plus particulièrement le titane, le zirconium, l'hafnium, le vanadium, le niobium, le tantale, le chrome, le molybdène, le tungtène, le manganèse, le fer, le cobalt et le nickel ; le verre minéral, etc...

Les borures de terres rares selon l'invention peuvent être mis en oeuvre sous les formes habituelles des abrasifs. Ils peuvent être utilisés sous forme d'une poudre qui peut être mise en oeuvre seule ou bien déposée sur un support, ou agglomérée à l'aide d'un liant.

Lorsqu'ils sont utilisés sous forme d'une poudre telle quelle, ils peuvent être employés à sec mais, le plus souvent, en suspension dans un liquide, par exemple l'eau, à raison d'une concentration qui peut varier entre 10 et 2000 g/l.

Les borures de terres rares, sous forme d'une poudre, peuvent également être déposés en couche

2

relativement mince à l'aide d'une colle ou d'une résine synthétique (de préférence, une résine phénolique) sur un support tel qu'un papier ou un tissu. Les présentations de ce support enduit d'abrasif pouvant être très variées : feuillets individuels ou disposés en roue, disques, bandes, courroies, etc...

Il est également possible de lier les poudres abrasives de l'invention à l'aide d'un liant, le plus souvent, de type vitrifié (céramiques) ou polymérique (par exemple bakélite), dans une matrice inerte lui donnant la forme adéquate, conique, cylindrique ou d'un disque plat, incurvé, etc...

Dans les exemples qui suivent, on va mettre en évidence les propriétés d'abrasion des borures de terres rares mais auparavant, on décrit, ci-après, le test utilisé permettant d'apprécier leur comportement.

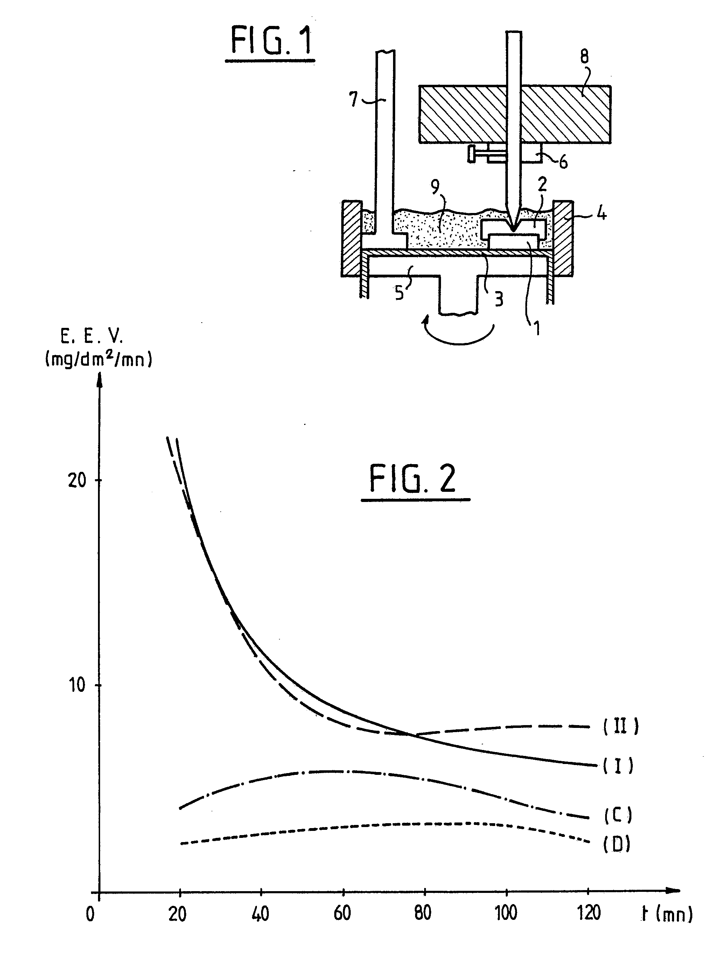

On conduit les essais sur une machine de polissage schématisée par la figure 1.

La signification des références est la suivante : matériau à polir mis sous forme d'une pastille (1), porte-pastille (2), polissoir (3), bol tournant (4), disque tournant (5), fixation du bras (6), tige-guide (7), poids (8), suspension de poudre abrasive (9).

Le principe de fonctionnement de la machine est le suivant :

Un moteur non représenté sur le schéma entraîne un bol (4) contenant la suspension de la poudre abrasive (9). Le matérau à polir (1) est soumis à un mouvement elliptique, sous pression constante exercée par un poids (8).

Les deux mouvements étant conjugués, le matériau à polir (1) couvre tout le polissoir (3).

Les particules du matériau abrasif s'intercalant entre le polissoir et le matériau à polir enlèvent la matière.

La pastille est pesée avant et après l'opération d'abrasion.

On exprime les résultats en vitesse d'enlèvement de matière (E.E.V.), c'est-à-dire le poids moyen enlevé est ramené à :

. l'unité de poids : le mg
. l'unité de surface : le $dm^2$
. l'unité de temps : la mn

Les conditions opératoires sont les suivantes :

- type de polissage : "au noyé"
- polissoir : feutre DP Plan
- vitesse de rotation : 23 tours/minute
- matériau à polir : éprouvette de 4 mm
  d'épaisseur et de 25
  mm de diamètre
- pression sur la pastille : 600 $g/cm^2$
- concentration de la : 125 g/l sauf mention
  suspension de poudre contraire
  abrasive
- température : ambiante (20°C)
- durée de l'essai : intervalle de 20
  minutes

Le polissoir utilisé est un feutre DP Plan commercialisé par la Société STRUERS, il s'agit d'un feutre de matières plastiques dures.

Le matériau à polir est une pièce soit en carbure de silicium (SIC) fritté à 99,5 %, soit en nitrure de silicium ($Si_3N_4$) qui sont toutes deux commercialisées par CERAMIQUES ET COMPOSITES.

Les exemples suivants 1 à 8 illustrent l'invention sans toutefois la limiter.

A titre comparatif, cinq essais sont conduits en mettant en oeuvre, à titre d'abrasifs :
. du carbure de bore $B_4C$ (essais A et C)
. du carbure de silicium SiC (essais B et D)
. du diamant (essai E).

Lesdits produits sont tous commercialisés par la Société STRUERS. Les poudres de $B_4C$ et SiC présentent une taille de grains de 10 µm. Le diamant est commercialisé sous forme d'une suspension de diamant 15 µm à 8 g/l.

### Exemples 1 à 8

Essais A et B :

Dans cet exemple, on met en oeuvre de l'hexaborure de cérium, à titre d'abrasifs.

L'hexaborure de cérium est préparé par réaction sous atmosphère d'argon à 1500°C, pendant 15 heures, entre de l'oxyde cérique et un mélange de bore élémentaire et de carbone, tous deux mis en oeuvre en excès de 10 % par rapport à la stoechiométrie.

Il est soumis à une opération de délitage des agglomérats aux ultra-sons. Il présente alors un diamètre

3

moyen de grains de 10 μm. La granulométrie est mesurée par une technique diffraction-diffusion laser (appareil CILAS-ALCATEL).

On prépare ensuite une suspension aqueuse d'hexaborure de cérium $CeB_6$ à raison de 125 g/l.

Pour les essais comparatifs, on prépare une suspension de carbure de bore $B_4C$ (essai A) et de carbure de silicium (essai B) à la même concentration de 125 g/l.

Les propriétés abrasives sont mises en évidence en effectuant le polissage d'une pièce en carbure de silicium.

Les résultats obtenus sont consignés dans le Tableau I suivant :

Tableau I

| Référence | Exemple 1 | Essai A | Essai B |
|---|---|---|---|
| Eprouvette | SiC | | |
| Abrasif | $CeB_6$ | $B_4C$ | SiC |
| Concen-tration de la suspen-sion (g/l) | 125 g/l | | |
| Durée (mn) | E.E.V. ($mg/dm^2/mn$) | | |
| 20 | 5,5 | 1,6 | 1,1 |
| 40 | 1,8 | | 0,3 |
| 60 | 2,2 | | 0,4 |
| 80 | 2,3 | 0,8 | |
| 100 | 1,9 | 0,7 | |

Il ressort de l'examen du Tableau I que l'hexaborure de cérium présente des propriétés abrasives supérieures à celles du carbure de bore et du carbure de silicium.

Exemple 2

Essais C et D

On reproduit les exemples et essais précédents dans les mêmes conditions à l'exception que le matériau soumis au test d'abrasion est une pièce en nitrure de silicium.

Les résultats obtenus sont rassemblés dans le Tableau II.

Tableau II

| Référence | Exemple 2 | Essai C | Essai D |
|---|---|---|---|
| Eprouvette | $Si_3N_4$ | | |
| Abrasif | $CeB_6$ | $B_4C$ | SiC |
| Concen-tration de la suspen-sion (g/l) | 125 g/l | | |
| Durée (mn) | E.E.V. ($mg/dm^2/mn$) | | |
| 20 | 20,5 | 4,2 | 2,4 |
| 40 | 11,1 | 5,6 | |
| 60 | 8,3 | | |
| 80 | 7,9 | | 3,2 |
| 100 | 6,4 | 4,4 | 3,2 |
| 120 | 6 | 3,4 | 2,4 |

On confirme donc la supériorité des propriétés abrasives de l'hexaborure de cérium sur un matériau céramique.

On reporte l'ensemble des résultats donnés dans le tableau II sur un graphe qui constitue la figure 2 et qui représente la variation de la vitesse d'enlèvement de la matière (E.E.V.) en fonction du temps (t).

Les courbes (I), (C), (D) correspondent respectivement à l'hexaborure de cérium, le carbure de bore et le carbure de silicium.

Le graphe met nettement en évidence la supériorité de l'abrasif, objet de la présente invention.

Exemples 3 et 4

Dans les différents exemples qui suivent, on met en oeuvre un hexaborure de lanthane et un hexaborure de praséodyme.

Les hexaborures de lanthane et de praséodyme sont préparés en faisant réagir leurs oxydes respectifs $La_2O_3$ et $Pr_6O_{11}$ avec du bore élémentaire et du carbone selon le même procédé utilisé pour préparer l'hexaborure de cérium de l'exemple 1.

Les poudres obtenues présentent un diamètre moyen de grains de 65 µm pour l'hexaborure de lanthane et de 19 µm pour l'hexaborure de praséodyme.

On met ensuite les hexaborures de lanthane et de praséodyme en suspension dans l'eau à raison de 125 g/l.

On effectue le test d'abrasion sur une pièce en nitrure de silicium.

On rassemble les résultats dans le Tableau III suivant. A titre de références, on reporte ceux obtenus avec l'hexaborure de cérium.

Tableau III

| Référence | Exemple 2 | Exemple 3 | Exemple 4 |
|---|---|---|---|
| Eprouvette | $Si_3N_4$ | | |
| Abrasif | $CeB_6$ | $LaB_6$ | $PrB_6$ |
| Concentration de la suspension (g/l) | 125 g/l | | |
| Durée (mn) | E.E.V. (mg/dm²/mn) | | |
| 20 | 20,5 | 20 | 12,4 |
| 40 | 11,1 | 11 | 6 |
| 60 | 8,3 | 7,8 | 5,8 |
| 80 | 7,9 | 7,6 | 5 |
| 100 | 6,4 | 8 | 4,3 |
| 120 | 6 | 8 | 3,6 |

On remarque les très bons résultats obtenus également avec l'hexaborure de lanthane et qui sont illustrés par la courbe (II) du graphe de la figure 2.

Exemples 5 à 8

Dans la série de tests suivants, on met en oeuvre une suspension dans l'eau d'hexaborure de cérium à différentes concentrations : 11 g/l, 30 g/l, 60 g/l, 90 g/l.

On effectue le test sur une pièce en nitrure de silicium.

Les différents résultats obtenus sont consignés dans le Tableau IV suivant :

Tableau IV

| Référence | Exemple 5 | Exemple 6 | Exemple 7 | Exemple 8 | Exemple 2 |
|---|---|---|---|---|---|
| Eprouvette | $Si_3N_4$ | | | | |
| Abrasif | $CeB_6$ | | | | |
| Concentration de la suspension (g/l) | 11 | 30 | 60 | 90 | 125 |
| Durée (mn) | E.E.V. $(mg/dm^2/mn)$ | | | | |
| 20 | 1,3 | 5,6 | 14,3 | 14,4 | 20,5 |
| 40 | 0,4 | 2,8 | 6,3 | 7,9 | 11,1 |
| 60 | 0,2 | 2,0 | 4,2 | 5,5 | 8,3 |

On remarque un accroissement de la vitesse d'enlèvement de matière avec la concentration de la suspension aqueuse en hexaborure de cérium.

Exemples 5 à 8

Essai E

Afin de comparer les propriétés abrasives de l'hexaborure de cérium et du diamant, on effectue le test avec la suspension commerciale de diamant définie ci-dessus.

On obtient les résultats donnés dans le Tableau V.

Tableau V

| Référence | Essai E |
|---|---|
| Eprouvette | $Si_3N_4$ |
| Abrasif | Diamant |
| Concentration de la suspension (g/l) | 8 |
| Durée (mn) | E.E.V. $(mg/dm^2/mn)$ |
| 20 | 6,25 |
| 40 | 3,4 |

En comparant le contenu des Tableaux IV et V, on note qu'à concentration égale, l'hexaborure de cérium a un pouvoir abrasif inférieur à celui du diamant mais qu'il devient équivalent pour une concentration d'environ 35 g/l.

**Revendications**

1. Utilisation comme abrasif d'au moins un borure de terre rare.

2. Utilisation d'au moins un borure de terre rare comme abrasif des matériaux durs.

3. Utilisation selon la revendication 2 caractérisée par le fait que le borure de terre rare est un borure de lanthanide ou d'yttrium.

4. Utilisation selon la revendication 3 caractérisée par le fait que le borure de terre rare est l'hexaborure de cérium, l'hexaborure de lanthane, l'hexaborure de praséodyme.

5. Utilisation selon la revendication 2 caractérisée par le fait que le matériau dur est une céramique, un métal ou du verre minéral.

6. Utilisation selon la revendication 5 caractérisée par le fait que le matériau dur est une céramique.

7. Utilisation selon la revendication 6 caractérisée par le fait que le matériau dur est un carbure de silicium, un nitrure de silicium.

8. Utilisation selon l'une des revendications 1 à 7, caractérisée par le fait que l'abrasif se présente sous forme d'une poudre dont la taille de grains s'échelonne entre 0,5 et 100 µm.

9. Utilisation selon la revendication 8 caractérisée par le fait que la poudre abrasive présente un diamètre moyen de grains d'environ 10 µm.

10. Utilisation selon l'une des revendications 1 à 9 caractérisée par le fait que le borure de terre rare est utilisé sous forme d'une poudre telle quelle ou déposée sur un support ou agglomérée à l'aide d'un liant.

# FIG.1

# FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,X | FR-A-2 616 447 (INTSTITUT SVERKHTVERDYKH MATERIALOV AKADEMII NAUK UKRAINSKOI SSR)<br>* Page 1, lignes 30-35; page 2, lignes 1-18 *<br>--- | 1-4 | C 09 K    3/14 |
| A | DERWENT PUBLICATIONS, abstract no. 84-242277; & SU-A-1 070 207 (A.N. TARASOV)<br>* Résumé *<br>----- | 1-4 | |

DOMAINES TECHNIQUES
RECHERCHES (Int. Cl.4)

C 09 K    3

Le présent rapport a été établi pour toutes les revendications

| Lieu de la recherche | Date d'achèvement de la recherche | Examinateur |
|---|---|---|
| LA HAYE | 28-07-1989 | BOULON A.F.J. |

EPO FORM 1503 03.82 (P0402)